Europäisches Patentamt

European Patent Office

Office européen des brevets

(19)

(11) Publication number: **0 011 289**
**B1**

(12) **EUROPEAN PATENT SPECIFICATION**

(45) Date of publication of patent specification: **04.05.83**

(51) Int. Cl.³: **F 16 K 5/06, F 16 K 5/20**

(21) Application number: **79104499.3**

(22) Date of filing: **14.11.79**

(54) Valve.

<table>
<tr><td>

(30) Priority: **14.11.78 JP 140763/78**
**15.03.79 JP 30701/79**

(43) Date of publication of application:
**28.05.80 Bulletin 80/11**

(45) Publication of the grant of the patent:
**04.05.83 Bulletin 83/18**

(84) Designated Contracting States:
**DE FR GB NL**

(56) References cited:
**DE - B - 1 220 216**
**FR - A - 2 221 658**
**GB - A - 948 336**
**US - A - 2 809 011**
**US - A - 3 006 600**
**US - A - 3 288 430**

</td><td>

(73) Proprietor: **KUBOTA LIMITED**
**No. 22, 2-chome Funade-machi Naniwa-ku**
**Osaka-shi Osaka 556 (JP)**

(72) Inventor: **Yamamoto, Ryozo**
**3-20-26. 2-chome, Ominemotomachi**
**Hirakata-shi/Osaka-fu (JP)**
Inventor: **Yanase, Keiichi**
**6-1-21, Kawaramachi**
**Hirakata-shi Osaka-fu (JP)**
Inventor: **Oku, Junzo**
**8-19, Muranohigashi-cho**
**Hirakata-shi Osaka-fu (JP)**

(74) Representative: **Liedl, Gerhard et al,**
**Steinsdorfstrasse 21-22**
**D-8000 München 22 (DE)**

</td></tr>
</table>

Courier Press, Leamington Spa, England

Valve

The invention relates to a valve including a valve housing, a tubular valve closure member having an inner diameter substantially equal to the diameter of the fluid passage within the valve housing and mounted to be rotatable within the valve housing around an axis normal to the direction of the fluid flow, an elastically flexible, substantially disc-shaped diaphragm provided on the valve closure member, a valve seat provided within the valve housing and having a contact surface to contact the diaphragm, the contact surface being spherically shaped to correspond to a portion of the surface of an imaginary sphere having its centre at the intersection of the rotational axis of the valve closure member and the central axis of the disc-shaped diaphragm, and annular stopper means provided on the valve closure member to contact an annular zone of the diaphragm adjacent to the portion of the diaphragm contacting the valve seat when the valve is closed, for stopping and controlling flexion of the diaphragm under fluid pressure, the central portion of the disc-shaped diaphragm being mounted on the valve closure member.

A conventional fluid-valve of this type is described in FR—A—2 221 658. The rotatable closure member is formed with an annular projection supporting the disc-shaped diaphragm which has its central portion rigidly connected to the valve closure member. When this valve is closed, the fluid pressure existing in the inlet fluid passage flexes the diaphragm into an annular groove formed between the annular projection and the central fastening means of the diaphragm, so that the outer edge of the diaphragm is pressed against the valve seat to produce a good sealing effect. Thus, the fluid pressure assists the force required to act upon the sealing portion of the diaphragm in order to attain sealing.

It is the object of the present invention to reduce further the force to be applied by the valve closure member against the diaphragm and thus to reduce the force which is required to operate and close the valve to seal off fluid reliably.

According to the invention this object is achieved by the central connecting portion of the diaphragm being keyed to the valve closure member to shift in the direction of the central axis thereof under fluid pressure.

Since the annular stopper means are adapted to bear against the diaphragm at an intermediate position between its connecting portion and its contacting portion, they not only control the amount of shifting and flexion of the diaphragm under fluid pressure but also cause the diaphragm to flex into pressing contact with the housing about a fulcrum provided by the portion supported by the stopper means under the action of fluid pressure on the portion of the diaphragm between the connecting portion and the supported portion. Valve closing operation per se need not be relied upon for flexing the diaphragm to provide it with an elastic force sufficient to resist fluid pressure. The valve of this invention is therefore operable with a relatively small force and provides reliable sealing by causing the diaphragm to press upon the valve seat provided at the valve housing with a strong force proportional to the fluid pressure acting on the diaphragm.

In the drawings illustrating a valve embodying the invention,

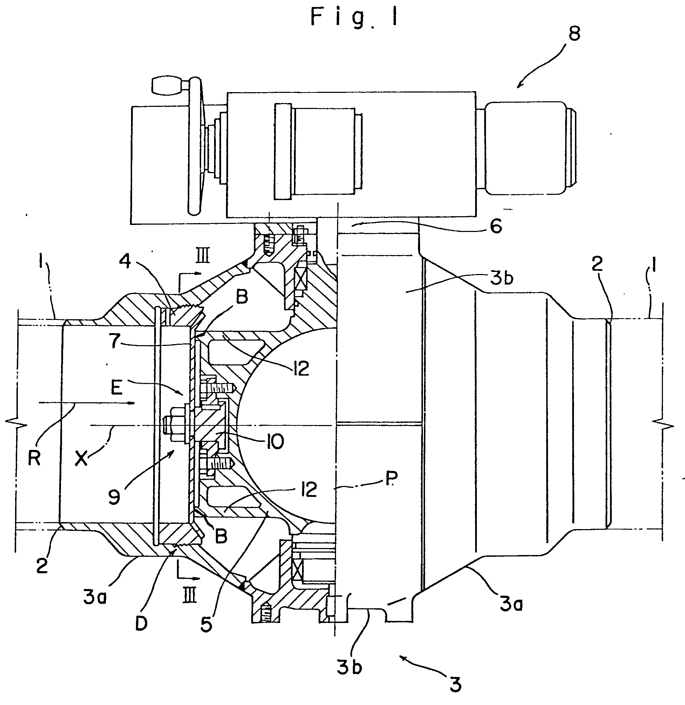

Figure 1 is a view in vertical section of the valve in its closed position,

Figure 2 is an enlarged sectional view of a principal part of the valve, and

Figure 3 is a section taken on line III—III of Figure 1.

A valve according to the preferred embodiment of this invention includes a valve housing 3 having coupling parts 2 to couple to fluid transmitting pipes 1 and valve seats 4 with spherical surfaces mounted within the valve housing 3. A valve closure member 5 is rotatably mounted in the valve housing 3. The valve closure member 5 has a tubular form with an inner diameter substantially equal to the diameter of the fluid passage of the valve housing 3. A valve stem 6 is provided integral with and extending normally to the axis X of the tubular valve closure member 5, one end of the stem 6 protruding from the housing 3. The valve closure member 5 carries, on opposite peripheral sides thereof, elastically flexible sealing members or diaphragms 7 adapted to press-contact the valve seats 4 to entirely shutoff the interior space of the valve housing 3 when the valve is closed. Thus the valve is adapted to open and close the fluid passage when a valve operator mechanism 8, operatively connected to the end of the stem 6 protruding from the valve housing 3, is actuated, to cause rotation of the valve closure member 5.

The valve housing 3 has four constituent sections, namely two sections 3a including the coupling parts 2 and two main sections 3b, interconnected into one body by welding or by mechanical means such as bolting.

Each of the diaphragms 7 has a disc shape and includes a central connecting portion 9 connected to the valve closure member 5 by means of a bolt 10. The valve closure member 5 has annular stopper means 12 integral therewith disposed opposite to an annular zone B of the first seat 7 radially intermediate between connecting portion 9 and a contacting portion 11. The stopper means 12 are adapted to abuttingly support the diaphragm 7 and control its shifting and flexion under fluid pressure and to

3  **0011289**  4

cause the diaphragm 7 to flex about a fulcrum provided by the zone B supported by the stopper means 12 under the action of fluid pressure acting in direction A on the diaphragm 7 between the control connecting portion 9 and the zone B, so that the contacting portion 11 of the diaphragm 7 presses against the valve seat 4.

The valve seat 4 is meshingly attached to the section 3a of the housing 3 which includes the coupling part 2 and is fixed by screws 13. This arrangement constitutes a seat adjuster mechanism D for moving the valve seat 4 towards and away from the diaphragm 7 and fixing it in position.

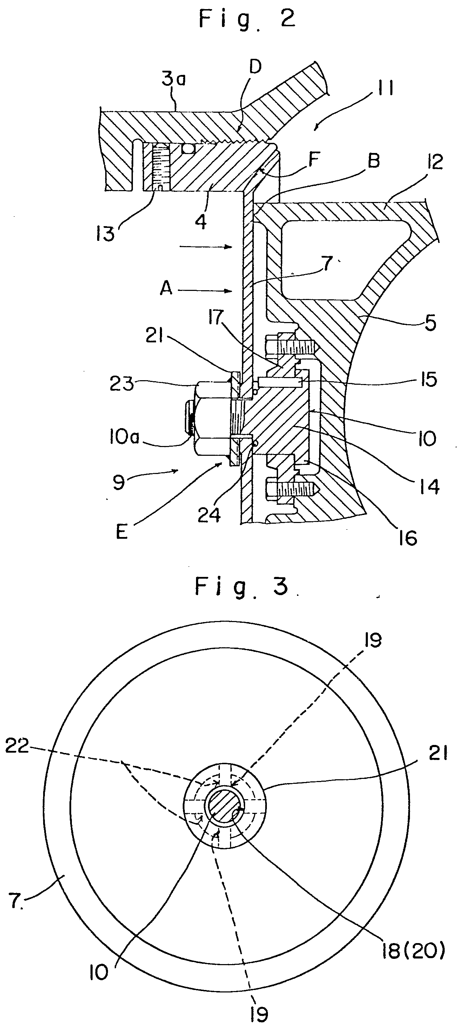

The bolt 10 is a stepped bolt with a head part 14 keyed as at 15 and a large diameter part 16 radially projecting from the head part 14 and engaging a position control element 17 removably attached to the valve closure member 5, whereby the bolt 10 is prevented from moving towards the valve seat 4. As shown in Figure 3, the diaphragm 7 includes centrally thereof an opening 18 having a greater diameter than a threaded part 10a of the bolt 10 and a cruciform engaging groove 19 defined in a thickened portion of the diaphragm 7. A collar member 21 has a central opening 20 equal in diameter to the central opening 18 and a cruciform boss 22 in engagement with the engaging groove 19, whereby the collar member 21 is engaged with the diaphragm 7. This arrangement constitutes a diaphragm adjuster mechanism E.

The diaphragm adjuster mechanism E is adapted to radially adjust the diaphragm 7 in position opposite to the valve seat 4 within a free range provided by the difference between the inner diameter of the collar member 21 and the outer diameter of the threaded part 10a of the bolt 10. The diaphragm 7 positionally adjusted as above is held tight by means of a nut 23, and the nut 23 and the collar 21 are welded together. Then the valve seat 4 is positionally adjusted to to the diaphragm 7. Thus the diaphragm 7 and the valve seat 4 are mounted on the valve closure member 5 and the valve housing 3 respectively, so that the diaphragm and the valve seat come into tight contact when the valve is closed.

Numeral 24 in the drawings denotes an O-ring provided between the back face of the diaphragm 7 and the head part 14 of the bolt 10 for sealing purposes, to prevent fluid leakage between the central opening 18 and the periphery of the bolt 10.

The valve seat 4 has a contact surface F to contact the diaphragm 7 shaped to correspond to part of an imaginary sphere having its centre at the intersection of the rotational axis P of the valve closure member 5 and the central axis X of the diaphragm 7. The diaphragm 7 and the valve seat 4 are thus adapted for face to face contact to produce a good sealing effect, by adjusting the mounting position of the diaphragm 7 on the valve closure member 5 and that of the valve seat 4 on the valve housing 3.

In the above embodiment, the collar member 21 provided on the diaphragm 7 is welded to the nut 23 so that the elastic quality of the diaphragm 7 is not affected by the welding. It is however possible to dispense with the collar member 21 and to weld the diaphragm 7 directly to the nut 23.

While this invention, as applied to the type of valve including a valve housing 3 composed of a plurality of sections 3a, 3b welded together, has a salient advantage of providing allowance for probable assembling errors arising in welding, the invention is applicable to the type including a valve housing with flange connections.

It is desirable to dispose the annular stopper means 12 in a position to bear against the diaphragm 7 so as to provide a maximum movement of the contacting portion 11, but the position of the stopper means 12 may be varied to suit specific requirements.

**Claims**

1. A valve including a valve housing (3), a tubular valve closure member (5) having an inner diameter substantially equal to the diameter of the fluid passage within the valve housing (3) and mounted to be rotatable within the valve housing (3) around an axis (P) normal to the direction (R) of the fluid flow, an elastically flexible, substantially disc-shaped diaphragm (7) provided on the valve closure member (5), a valve seat (4) provided within the valve housing (3) and having a contact surface (F) to contact the diaphragm (7), the contact surface (F) being spherically shaped to correspond to a portion of the surface of an imaginary sphere having its centre at the intersection of the rotational axis (P) of the valve closure member (5) and the central axis (X) of the disc-shaped diaphragm (7), and annular stopper means (12) provided on the valve closure member (5) to contact an annular zone (B) of the diaphragm (7) adjacent to the portion (11) of the diaphragm (7) contacting the valve seat (4) when the valve is closed, for stopping and controlling flexion of the diaphragm (7) under fluid pressure (A), the central portion (9) of the disc-shaped diaphragm (7) being mounted on the valve closure member (5), characterized in that the central connecting portion (9) of the diaphragm (7) is keyed to the valve closure member (5) to shift in the direction of the central axis (X) thereof under fluid pressure.

2. A valve according to claim 1, characterized in that the central connecting portion (9) of the diaphragm (7) is connected to a bolt (10) by a nut (23), which bolt (10) is shiftably received in a position control element (17) which is directly secured to the valve closure member (5) and has a head part (14) keyed (15) to the position control element (17) and a large diameter part (16) which radially projects from the head part (14) and contacts in the absence of fluid pressure the position control element (17), whereby the bolt (10) is prevented from moving away from the closure member (5).

3. A valve according to claim 2, characterized by adjuster means (E) for radially adjusting the diaphragm (7) to the valve seat (4), the adjuster means (E) including an opening (18) defined centrally in the diaphragm (7) and having a greater diameter than the bolt (10), a thickened portion of the diaphragm (7) surrounding the central opening (18) and being provided with a cruciform engaging groove (19), and a collar (21) having a central opening (20) of a diameter equal to that of the central opening (18) of the diaphragm (7) and a cruciform boss (22) to engage with the engaging groove (19).

4. A valve according to claim 3, characterized by adjuster means (D) for moving the valve seat (4) towards and away from the diaphragm (7), the adjuster means (D) including meshing means defined on the valve seat (4) and the valve housing (3) along the fluid passage.

## Revendications

1. Vanne comportant un carter de vanne (3), un élément tubulaire de fermeture de vanne (5) dont le diamètre intérieur est sensiblement égal au diamètre du passage de fluide à l'intérieur du carter de vanne (3) et qui est monté pour pouvoir tourner à l'intérieur du carter de vanne (3) autour d'un axe (P) perpendiculaire au sens (R) de l'écoulement du fluide, un diaphragme (7) sensiblement discoïdal et élastiquement flexible monté sur l'élément de fermeture de vanne (5), un siège de vanne (4) prévu à l'intérieur du carter de vanne (3) et ayant une surface de contact (F) pour entrer en contact avec le diaphragme (7), la surface de contact (F) ayant une forme sphérique correspondant à une portion de la surface d'une sphère imaginaire ayant son centre à l'intersection de l'axe de rotation (P) de l'élément de fermeture de vanne (5) et l'axe central (X) du diaphragme discoïdal (7), et des moyens de butée annulaires (12) prévus sur l'élément de fermeture de vanne (5) pour entrer en contact avec une zone annulaire (B) du diaphragme (7) adjacente à la portion (11) du diaphragme (7) en contact avec le siège de vanne (4) lorsque la vanne est fermée, pour limiter la flexion du diaphragme (7) sous l'action de la pression du fluide (A), la portion centrale (9) du diaphragme discoïdal (7) étant montée sur l'élément de fermeture de vanne (5), caractérisée en ce que la portion de fixation centrale (9) du diaphragme (7) est clavetée sur l'élément de fermeture de vanne (5) pour se déplacer dans la direction de l'axe central (X) de celui-ci sous l'action de la pression du fluide.

2. Vanne selon la revendication 1, caractérisée en ce que la portion de fixation centrale (9) du diaphragme (7) est fixée sur un boulon (10) par un écrou (23), lequel boulon (10) est logé de façon coulissante dans un élément de réglage de position (17), qui est directement fixé sur l'élément de fermeture de vanne (5), et a une tête (14), clavetée (15) sur l'élément de réglage de position (17), et une partie de plus grand diamètre (16) qui se projette radialement de la tête (14) et, en l'absence de pression de fluide, est en contact avec l'élément de réglage de position (17), grâce à quoi le boulon (10) ne peut s'écarter de l'élément de fermeture (5).

3. Vanne selon la revendication 2, caractérisée en ce qu'il est prévu des moyens de réglage (E) pour ajuster radialement le diaphragme (7) par rapport au siège de soupape (4), les moyens de réglage (E) comportant une ouverture (18) définie au centre dans le diaphragme (7) et ayant un plus grand diamètre que le boulon (10), une portion plus épaisse du diaphragme (7) entourant l'ouverture centrale (18) et comportant une rainure de coopération cruciforme (19), et un collier (21) ayant une ouverture centrale (20) d'un diamètre égal à celui de l'ouverture centrale (18) du diaphragme (7) et un bossage cruciforme (22) coopérant avec la rainure de coopération (19).

4. Vanne selon la revendication 3, caractérisée en ce que des moyens de réglage (D) permettent de rapprocher ou d'éloigner le siège de soupape (4) du diaphragme (7), ces moyens de réglage (D) comportant des moyens de filetage définis sur ie siège de vanne (4) et le carter de vanne (3) le long du passage de fluide.

## Patentansprüche

1. Ventil mit einem Ventilgehäuse (3) einem rohrförmigen Ventilverschluß (5), dessen Innendurchmesser im wesentlichen gleich dem Durchmesser des Durchflußkanals im Ventilgehäuse (3) ist und der im Ventilgehäuse (3) um eine zur Fließrichtung (R) senkrechte Drehachse (P) drehbar befestigt ist, einer elastisch flexiblen, im wesentlichen scheibenförmigen Membran (7), welche am Ventilverschluß (5) vorgesehen ist, einem im Ventilgehäuse (3) vorgesehenen Ventilsitz (4), der eine an der Membran (7) anliegende Berührungsfläche (F) aufweist, die kugelförmig gekrümmt ist und einer Kugelteilfläche einer imaginären Kugel entspricht, deren Mittelpunkt im Schnittpunkt der Drehachse (P) des Ventilverschlusses (5) und der Mittelachse (X) der schiebenförmigen Membran (7) liegt und mit am Ventilverschluß (5) vorgesehenen ringförmigen Anschlagmitteln (12), die an einem ringförmigen Bereich (B) der Membran (7) in der Nähe des Teils (11) der Membran (7) anliegen, der bei geschlossenem Ventil den Ventilsitz (4) berührt und welche die Durchbiegung der Membran unter dem Druck (A) des fließfähigen Mediums steuern, wobei die Membran (7) mit einem mittleren Verbindungssteil (9) am Ventilverschluß (5) befestigt ist, dadurch gekennzeichnet,

daß der mittlere Verbindungsteil (9) der Membran (7) in Richtung der Mittelachse (X) verschieblich auf den Ventilverschluß (5) aufgekeilt ist.

2. Ventil nach Anspruch 1, dadurch gekennzeichnet, daß der mittlere Verbindungsteil (9)
der Membran (7) mittels einer Mutter (23) mit
einem Bolzen (10) verbunden ist, der verschiebbar in einem direkt am Ventilverschluß (5) befestigten Lagersteuerelement (17) aufgenommen
ist und einen Kopfteil (14) bestizt, der eine Keilverbindung (15) zum Lagesteuerelement (17)
sowie einen im Durchmesser vergrößerten Teil
(16), der sich radial vom Kopfteil (14) erstreckt,
aufweist und bei fehlendem Druck des fließfähigen Mediums das Lagestueuerelement (17)
berührt, wobei der Bolzen (10) an einer Wegbewegung vom Ventilverschluß (5) gehindert ist.

3. Ventil nach Anspruch 2, gekennzeichnet
durch Einstellmittel (E) zur radialen Einstellung
der Membran (7) gegenüber dem Ventilsitz (4),
welche in der Mitte der Membran (7) eine Öffnung (18) mit größerem Durchmesser als der
Bolzen (10) besitzen, wobei ein verdickter Teil
der Membran (7) die mittlere Öffnung (18)
umgibt und mit einer kreuzförmigen Eingriffsnut
(19) versehen ist, in die ein kreuzförmiger
Vorsprung (22) eines eine mittlere Öffnung (20)
mit gleichem Durchmesser wie die mittlere Öffnung (18) der Membran (7) aufweisenden
Kragens (21) eingreift.

4. Ventil nach Anspruch 3, gekennzeichnet
durch Einstellmittel (D) zur Verschiebung des
Ventilsitzes (4) auf die Membran (7) zu und von
dieser weg, welche entlang des Durchflußkanals am Ventilsitz (4) und dem Ventilgehäuse
(3) vorgesehene Eingriffsmittel aufweisen.

# Fig. I

**0011289**

Fig. 2

Fig. 3